# EUROPÄISCHE PATENTSCHRIFT

(11) **EP 1 534 560 B1**
(45) Veröffentlichungstag und Bekanntmachung des Hinweises auf die Patenterteilung: **24.10.2012**
(21) Anmeldenummer: 03790638.5
(22) Anmeldetag: 10.07.2003
(51) Int. Cl.: B60R 11/04

(54) **VERFAHREN UND VORRICHTUNG ZUR BEFESTIGUNG UND AUSRICHTUNG EINES SENSORS**
METHOD AND DEVICE FOR SECURING AND ORIENTING A SENSOR
PROCEDE ET DISPOSITIF PERMETTANT DE FIXER ET D'ORIENTER UN CAPTEUR

(30) Priorität: 24.08.2002 DE 10238935
(43) Veröffentlichungstag der Anmeldung: 01.06.2005
(73) Patentinhaber: ROBERT BOSCH GMBH, 70442 Stuttgart (DE)
(72) Erfinder: KURFISS, Frank, 75417 Muehlacker (DE); APEL, Uwe, 72666 Neckartailflingen (DE); SKUPPIN, Andre, 71701 Schwieberdingen (DE)
(86) Internationale Anmeldenummer: PCT/DE2003/002314
(87) Internationale Veröffentlichungsnummer: WO 2004/020250

(56) Entgegenhaltungen:
- EP-A- 0 934 851
- EP-A- 0 982 196
- DE-A- 10 162 652
- PATENT ABSTRACTS OF JAPAN vol. 2000, no. 24, 11. Mai 2001 (2001-05-11) -& JP 2001 197337 A (ICHIKOH IND LTD), 19. Juli 2001 (2001-07-19)
- PATENT ABSTRACTS OF JAPAN vol. 2002, no. 11, 6. November 2002 (2002-11-06) -& JP 2002 207149 A (HITACHI LTD;NISSAN MOTOR CO LTD), 26. Juli 2002 (2002-07-26)
- PATENT ABSTRACTS OF JAPAN vol. 1999, no. 08, 30. Juni 1999 (1999-06-30) -& JP 11 078716 A (SONY CORP), 23. März 1999 (1999-03-23)

## Beschreibung

### Stand der Technik

Die Erfindung betrifft ein Verfahren und eine Vorrichtung zur Befestigung und Ausrichtung eines Sensors, insbesondere eines Videosensors an der Windschutzscheibe eines Kraftfahrzeuges.

Heutige Kraftfahrzeuge sind mit einer Vielzahl an Sensoren, wie Ultraschallsensoren oder Videosensoren, ausgestattet, um beispielsweise Informationen über die Kraftfahrzeugumgebung zu gewinnen. Der Befestigung und Ausrichtung dieser Sensoren am Kraftfahrzeug kommt dabei eine große Bedeutung zu, um die Funktion der Sensoren zu gewährleisten.

Insbesondere werden in Kraftfahrzeugen vermehrt Videosensoren zur Gewinnung von Umgebungsinformationen verwendet. Beispielsweise werden Stereokamerasysteme zur Beobachtung des vor dem Kraftfahrzeug befindlichen Straßenraumes zur Objekterkennung oder Abstandsmessung zu vorausfahrenden Kraftfahrzeugen eingesetzt. Bei Stereokamerasystemen werden dabei zwei Videosensoren benutzt, die derart angeordnet sind, dass sie im wesentlichen dieselbe Szene aufnehmen.

Aus der nicht vorveröffentlichten deutschen Patentanmeldung 10162652.5 vom 20.12.2001 sind Verfahren zur Befestigung von Videosensoren im Kraftfahrzeuginnenraum bekannt, wobei der Sensor über ein Halteelement mit einer Unterlage, insbesondere der Innenseite der Windschutzscheibe oder dem Dach, verbunden wird. Nachteil dieser Verfahren ist, dass keine präzise mechanische Ausrichtung der Sensoren vorgenommen wird. Insbesondere bei Stereokamerasystemen legt der gemeinsam erfasste Blickwinkel der Videosensoren den Nutzbereich des Systems fest, da zur Auswertung der Bildinformationen überlappende Bildbereiche der beiden Videosensoren benötigt werden. Die präzise mechanische Ausrichtung der Videosensoren, also die Einstellung der Sensorachse, spielt damit für den Nutzbereich des Stereokamerasystems und für die nachfolgende Bildverarbeitung eine entscheidende Rolle.
Die Sensorachse wird dabei als eine Vorzugsrichtung mit Blick auf den Messvorgang verstanden. Bei einem Videosensor entspricht die optische Achse der Sensorachse.

### Vorteile der Erfindung

Das nachfolgend beschriebene Verfahren zur Befestigung und Ausrichtung eines Sensors über ein Halteelement mit einer Unterlage hat den Vorteil, dass eine präzise Ausrichtung der Sensorachse in die Soll-Richtung erfolgt. In Kraftfahrzeugen werden beispielsweise Stereokamerasystemen zur Gewinnung von Informationen aus der Umgebung des Kraftfahrzeuges eingesetzt, wobei Stereokamerasysteme aus zwei Videosensoren bestehen, die im wesentlichen dieselbe Szene aufnehmen. Zur Auswertung der Bildinformationen werden überlappende Bildbereiche der beiden Videosensoren benötigt. Der gemeinsam erfasste Blickwinkel der beiden Videosensoren definiert dabei den Nutzbereich des Stereokamerasystems. Durch die präzise Ausrichtung der Videosensoren erhöht das hier beschriebene Verfahren in vorteilhafter Weise den Nutzbereich des Stereokamerasystems. Bei Stereokamerasystemen ermöglich das beschriebene Verfahren und die Vorrichtung in vorteilhafter Weise die Befestigung und die präzise Ausrichtung der Sensorachsen der beiden Videosensoren relative zueinander. Insbesondere wird in vorteilhafter Weise eine Einstellung der Sensorachsen der beiden Videosensoren derart ermöglicht, dass ein Schielen der Videosensoren vorliegt. Dabei wird der erfasste Bereich des Stereokamerasystems insbesondere beim Einbau in das Kraftfahrzeug näher an das Kraftfahrzeug gelegt.

Durch Nachbearbeitung der Sensorauflage ermöglicht das nachfolgend beschriebene Verfahren und die Vorrichtung in besonders vorteilhafter Weise die Befestigung und Ausrichtung wenigstens eines Sensors, insbesondere bei Kraftfahrzeugen. Durch die messtechnische Bestimmung der Abweichung der Sensorachse von der Soll-Richtung durch Vermessung der Sensorauflage und die anschließende Nachbearbeitung wird in vorteilhafter Weise die präzise Ausrichtung der Sensorachse des wenigstens einen Sensors erreicht.
In einer Variante des Verfahrens wird bei Verwendung wenigstens eines Videosensors die Abweichung der Sensorachse von der Soll-Richtung dadurch ermittelt, dass der wenigstens eine Videosensor vorübergehend in das nicht nachbearbeitete Halteelement eingebaut wird. Durch Bestimmung der Abweichung durch Verfahren der Bildverarbeitung, beispielsweise durch Kalibrierungsverfahren an einem Kalibrierfeld, werden in dieser Variante in besonders vorteilhafter Weise die Herstellungstoleranzen von Unterlage und/oder Halteelement und/oder Sensorauflage und/oder des Videosensors ermittelt und bei der anschließenden Nachbearbeitung kompensiert.
In einer weiteren Variante wird ein Träger verwendet, mit dem die Unterlage verbunden wird. Der Träger ist ein Teil der Nachbearbeitungsvorrichtung. Durch den Träger wird die relative Position der Unterlage und des Halteelements bezüglich der Nachbearbeitungsvorrichtung festgelegt. Die Nachbearbeitungsvorrichtung ermöglicht die Nachbearbeitung der Sensorauflage durch materialabtragende Bearbeitungsverfahren, vorzugsweise Fräsen, Bohren und/oder Laserbearbeitung. In besonders vorteilhafter Weise entfällt in dieser Variante des beschriebenen Verfahrens die vorherige Messung der Abweichung der Sensorachse von der Soll-Richtung, weil durch die Verbindung der Unterlage mit dem Träger die Position der Unterlage direkt festgelegt ist. Dies ermöglicht die kostengünstige Durchführung des Verfahrens, da teure Messgeräte zur Bestimmung der Abweichung der Sensorachse von der Soll-Richtung nicht notwendig sind.

In vorteilhafter Weise kann das Verfahren für die Befestigung und Ausrichtung verschiedener Sensortypen, wie beispielsweise Ultraschallsensoren, lichtempfindliche Sensoren, Videosensoren oder Sensoren für elektromagnetische Strahlung, verwendet werden. Voraussetzung ist lediglich, dass die Sensoren eine Sensorachse aufweisen.

Vorteilhaft ist, dass das Verfahren bei konvexen, konkaven und/oder ebenen Oberflächen der Unterlage verwendet werden kann. Besonders vorteilhaft ist das beschriebene Verfahren und die Vorrichtung bei der Befestigung und Ausrichtung von Sensoren, vorzugsweise Videosensoren, an der Windschutzscheibe eines Kraftfahrzeuges. Windschutzscheiben in Kraftfahrzeugen haben eine gekrümmte Oberfläche. Die Krümmung weist aufgrund des Formgebungsprozesses bei der Herstellung der Windschutzscheiben eine große Streuung auf. Das Halteelement hat häufig ebenfalls Bauteiltoleranzen, die eine Abweichung der Sensorachse von der Soll-Richtung zur Folge haben. In vorteilhafter Weise führt das Verfahren beim Vorliegen von Bauteiltoleranzen der Windschutzscheibe und/oder des Halteelements zu einer präzisen Ausrichtung der Sensorachse in die Soll-Richtung.

In vorteilhafter Weise kann das Verfahren bei beliebiger Soll-Richtung der Sensorachse eingesetzt werden. Insbesondere eignet sich das Verfahren, wenn die Sensorachse in Richtung des Halteelements und der Unterlage oder entgegengesetzt zeigt.

Bei Ausrichtung der Sensorachse zum Halteelement und der Unterlage muss die Unterlage und/oder das Halteelement für die sensorbeeinflussenden Größen durchlässig sein. In vorteilhafter Weise kann die Durchlässigkeit für die sensorbeeinflussenden Größen auch durch materialabtragende Bearbeitungsverfahren erreicht werden.

Vorteilhaft ist ferner, dass das Verfahren bei Verwendung eines Klebeprozesses zur Befestigung des Halteelements mit der Unterlage eingesetzt werden kann. In besonders vorteilhafter Weise kann gleichzeitig mit dem Aushärten des Klebers die präzise Ausrichtung des Sensors durch Nachbearbeiten der Sensorauflage durchgeführt werden. Damit ist eine schnelle Durchführung der Befestigung des Halteelements gewährleistet und gleichzeitig kann die exakte Ausrichtung der Sensorachse erfolgen. Insbesondere bei Verwendung des beschriebenen Verfahrens bei der Befestigung von Videosensoren an der Innenseite der Windschutzscheibe eines Kraftfahrzeuges, führt das beschriebene Verfahren zu einer Zeit- und Kostenersparnis, weil beide Verfahrensschritte parallel durchgeführt werden können.

In vorteilhafter Weise kann die Nachbearbeitung der Sensorauflage durch verschiedene materialabtragende Bearbeitungsverfahren, vorzugsweise Fräsen, Bohren und/oder Laserbearbeitung, je nach der Art und den Eigenschaften des verwendeten Materials des Halteelements, erfolgen.

In besonders vorteilhafter Weise ermöglicht das beschriebene Verfahren durch Anbringen einer Zentrierstiftaufnahme die Ausrichtung des Sensors in bezug auf seine Verdrehung um die Sensorachse. Vorteilhaft ist dabei, dass das Anbringen der Zentrierstiftaufnahme während der Nachbearbeitung des Haltelements erfolgen kann und dadurch kein weiterer Verfahrensschritt notwendig ist. Dies gewährleistet eine schnelle und kostengünstige Durchführung des Verfahrens.

In einer Variation des Verfahrens wird die Aufnahme für einen Teil des Sensors und/oder der Sensorvorraum während der Nachbearbeitung der Sensorauflage durch ein Verschlusselement vor dem Eindringen von Spänen und anderen Verschmutzungen geschützt. Insbesondere beim Einbau von Videosensoren führt dies in vorteilhafter Weise zu einer höheren Bildqualität, weil der Strahlengang der Bilder nicht durch Verschmutzungen gestört wird. In vorteilhafter Weise führt dies zu einer Verlängerung der Betriebsdauer der Sensoren, da andernfalls beispielsweise zurückbleibendes Bohrwasser zu einer Korrosion des Sensors und/oder des Halteelements führen kann.

Die nachfolgend beschriebene Vorrichtung zur Befestigung und Ausrichtung eines Sensors über ein Haltelement an einer Unterlage hat den Vorteil, dass bei der Nachbearbeitung der Sensorauflage zur Ausrichtung des Sensors in die Soll-Richtung die Aufnahme nicht geändert werden muss. Dies führt zu einer zeit- und kostensparenden Durchführung des Verfahrens, da eine weitere Bearbeitung des Halteelements nicht notwendig ist. Vorteilhaft ist, dass die Sensorauflage durch Verwendung eines Übermaßes nachbearbeitet werden kann und die Aufnahme größer als der aufzunehmenden Teil des Sensors durch Verwendung eines Übermaßes ist.

In vorteilhafter Weise ist die Vorrichtung so gestaltet, dass der Sensorvorraum größer ist als der Erfassungswinkel des Sensors. Damit wird eine Nachbearbeitung des Sensorvorraumes bei Bearbeitung der Sensorauflage nicht nötig. Dies führt zu einer zeit - und kostensparenden Durchführung des beschriebenen Verfahrens.

In einer Variation der Vorrichtung werden die Aufnahme und der Sensorvorraum durch einen Dichtungsring bei eingebautem Sensor gegen die Umgebung abgedichtet. Insbesondere bei Verwendung eines Videosensors führt dies in vorteilhafter Weise zu einer Reduzierung der Verschmutzung des Sensors während des Betriebes und damit zu einer Verbesserung der Bildqualität.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsforrn näher erläutert.

Es zeigen:
Figur 1 die Seitenansicht einer Vorrichtung zur Befestigung und Ausrichtung eines Sensors vor der Nachbearbeitung der Sensorauflage,
Figur 2 die Aufsicht einer Vorrichtung zur Befestigung und Ausrichtung eines Sensors vor der Nachbearbeitung der Sensorauflage,
Figur 3 die Seitenansicht einer Vorrichtung zur Befestigung und Ausrichtung eines Sensors nach der Bearbeitung der Sensorauflage,
Figur 4 die Aufsicht einer Vorrichtung zur Befestigung und Ausrichtung eines Sensors nach der Bearbeitung der Sensorauflage,
Figur 5 die Seitenansicht einer Vorrichtung mit Verschlusselement bei der Nachbearbeitung mit einem Fräskopf,
Figur 6 die Darstellung einer Vorrichtung mit Zentrierstiftaufnahme und Zentrierstift zur Ausrichtung des Sensors.

### Beschreibung von Ausführungsbeispielen

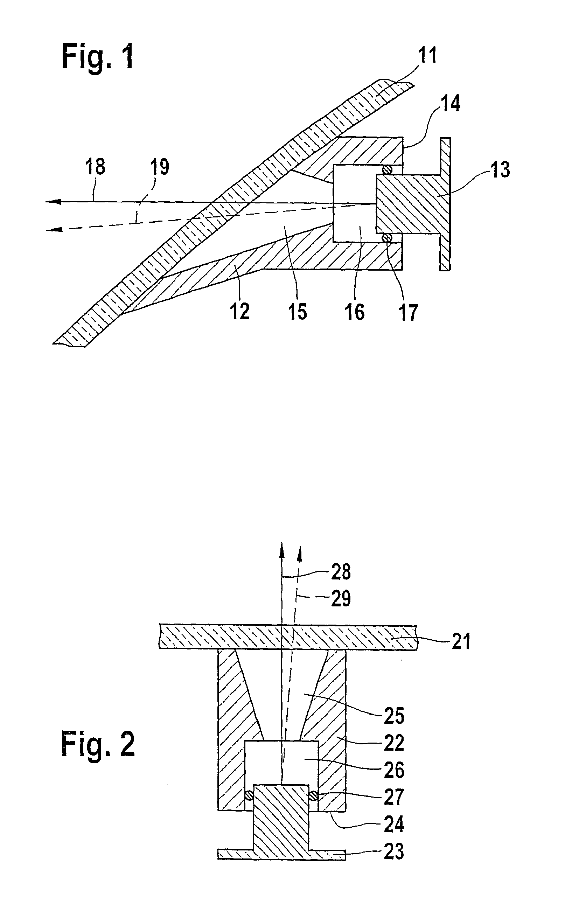

Figur 1 und 2 zeigen die Seitenansicht und die Aufsicht einer Vorrichtung zur Befestigung und Ausrichtung eines Sensors 13, 23, im bevorzugten Ausführungsbeispiel ein Videosensor, vor der Nachbearbeitung der Sensorauflage 14, 24. Die Unterlage 11, 21, an die der Videosensor 13, 23 angebracht wird, ist im bevorzugten Ausführungsbeispiel die Windschutzscheibe eines Kraftfahrzeuges. Der Videosensor 13, 23 wird über ein Halteelement 12, 22 an der Unterlage 11,21 verbunden. Die Verbindung des Videosensors 13, 23 mit dem Halteelement 12, 22 erfolgt über die Sensorauflage 14, 24. Das Halteelement 12, 22 weist im bevorzugten Ausführungsbeispiel eine zylindrische Aufnahme 16, 26 für einen Teil des Videosensors 13, 23 auf. Der Sensorvorraum 15, 25 dient als Streulichtblende zur Verminderung von störendem eingestreuten Licht. In Figur 1 und 2 ist die Abweichung der Sensorachse 18, 28 von der Soll-Richtung 19, 29 eingezeichnet. Die Sensorachse 18, 28 wird im bevorzugten Ausführungsbeispiel durch die optische Achse des Videosensors 13, 23 festgelegt. Im bevorzugten Ausführungsbeispiel ist die Soll-Richtung 19, 29 relative bezüglich der Fahrachse des Kraftfahrzeuges festgelegt. Die Soll-Richtung 19, 29 wird bezüglich der Fahrachse durch vorzugsweise zwei Winkel, beispielsweise dem vertikalen Nickwinkel und dem horizontalen Gierwinkel, festgelegt. In der ersten Variante des bevorzugten Ausführungsbeispiels ist beispielsweise die Soll-Richtung 19, 29 parallel zur Fahrachse, während in der zweien Variante die Sollrichtung vertikal gegenüber der Fahrachse verkippt ist.
Im ersten Verfahrensschritt wird das Halteelement 12, 22 beispielsweise durch einen Klebeprozess mit der Unterlage 11, 21 verbunden. Im bevorzugten Ausführungsbeispiel befindet sich das Halteelement 12, 22 an der Innenseite einer Windschutzscheibe eines Kraftfahrzeuges. Das Halteelement 12, 22 wird nahe am inneren Rückspiegel befestigt, um zugleich im gewischten Bereich der Windschutzscheibe zu liegen und die Sicht des Fahrers möglichst wenig zu beeinträchtigen.
In einer ersten Variante des bevorzugten Ausführungsbeispiels wird nach Aushärtung des Klebers im nächsten Verfahrensschritt die Abweichung der Sensorachse 18, 28 von der Soll-Richtung 19, 29 messtechnisch bestimmt. Bevorzugt wird die Abweichung der Sensorachse 18, 28 von der Soll-Richtung 19, 29 indirekt durch Vermessen der Sensorauflage 14, 24 ermittelt. Die Vermessung erfolgt dabei durch optische und/oder mechanische Messverfahren, wie beispielsweise Taster. Alternativ ist in einer zweiten Variante des bevorzugten Ausführungsbeispiels der vorübergehende Einbau des Videosensors 13, 23 in das nicht nachbearbeitete Halteelement 12 möglich. Dabei kann die Abweichung der Sensorachse 18, 28 von der Soll-Richtung 19, 29 durch die Verwendung eines Kalibrierfeldes durchgeführt werden. Die Abweichung wird dabei durch Verfahren der Bildverarbeitung ermittelt.
In einer weiteren Variante des bevorzugten Ausführungsbeispiels ist die messtechnische Ermittlung der Abweichung der Sensorachse 18, 28 von der Sollrichtung 19, 29 nicht notwendig. Vielmehr wird in dieser Variante die Unterlage 11, 21, im bevorzugten Ausführungsbeispiel die Windschutzscheibe, mit einem Träger befestigt, der Teil der Nachbearbeitungsvorrichtung ist. Der Träger legt die relative Position der Unterlage 11, 21 und des Halteelements 12, 22 bezüglich der Nachbearbeitungsvorrichtung fest. Dies ermöglicht eine direkte Nachbearbeitung ohne vorherige Messung der Abweichung der Sensorachse 18, 28 von der Soll-Richtung 19, 29.
Im folgenden Verfahrensschritt wird die Nachbearbeitung der Sensorauflage 14, 24 beispielsweise aufgrund der ermittelten Abweichung durchgeführt. Zur Nachbearbeitung des in Spritzgusstechnik hergestellten Halteelements 12, 22 können verschiedene materialabtragende Bearbeitungsverfahren, vorzugsweise Fräsen, Bohren und/oder Laserbearbeitung, verwendet werden.
Im letzten Verfahrensschritt wird der Videosensor 13, 23 über die nachbearbeitete Sensorauflage 14, 24 mit dem Halteelement 12, 22 verbunden. Zur Verbindung können verschiedene Verfahren, insbesondere Kleben, Schrauben oder Snap-In-Technik, verwendet werden. Der Dichtungsring 17, 27 dient zur Abdichtung der Aufnahme 16 , 26 und des Sensorvorraumes 15, 25 des Halteelements 12, 22 gegen die Umgebung der Vorrichtung vor allem während des Betriebes des Videosensors 13, 23.

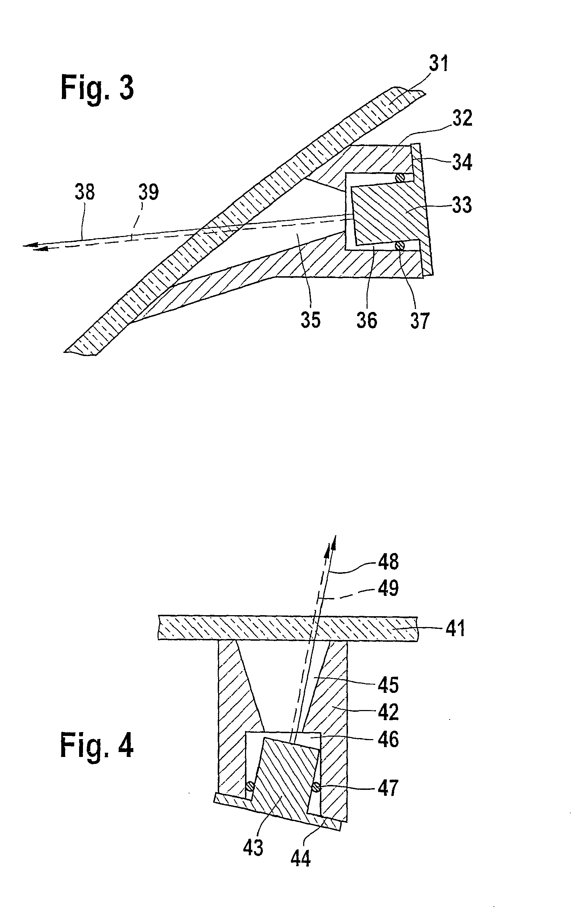

Figur 3 und 4 zeigen die Seitenansicht und Aufsicht einer Vorrichtung zur Befestigung und Ausrichtung eines Sensors 33, 43 nach der Bearbeitung der Sensorauflage 34, 44. Das Halteelement 32, 42 ist mit der Unterlage 31, 41 verbunden. Die Sensorachse 38, 48 ist in Soll-Richtung 39, 49 ausgerichtet.
Im bevorzugten Ausführungsbeispiel ist die Aufnahme 36, 46 durch ein Übermaß so dimensioniert, so dass sie die Verkippung des Videosensors 33, 43 nach Bearbeitung der Sensorauflage 34, 44 in Durchmesser und Tiefe aufnehmen kann. Der Sensorvorraum 35, 45 ist als kegelförmige Aussparung so festgelegt, dass nach der Bearbeitung der Sensorauflage 34, 44 der Erfassungswinkel des Videosensors 33, 43 durch die Wände des Sensorvorraumes 35, 45 nicht eingeschränkt wird. Der Dichtungsring 37, 47 ermöglicht die Abdichtung des Innenraumes des Halteelements 32, 42 nach Bearbeitung der Sensorauflage 34, 44, wobei der Dichtungsring 37, 47 so gestaltet ist, dass bei Verkippung des Videosensors 33, 43 die Abdichtung gewährleistet ist. Das Halteelement 32, 42 ist so gestaltet, dass eine Bearbeitung der Sensorauflage 34, 44 bei verbundenem Halteelement 32, 42 mit der Unterlage 31, 41 möglich ist. Gleichzeitig ist die Sensorauflage 34, 44 so dimensioniert, dass die Funktion und Stabilität des Halteelements 32, 42 durch die Nachbearbeitung nicht beeinträchtigt wird. Dies wird vorzugsweise durch Festlegung eines Übermaßes erreicht.

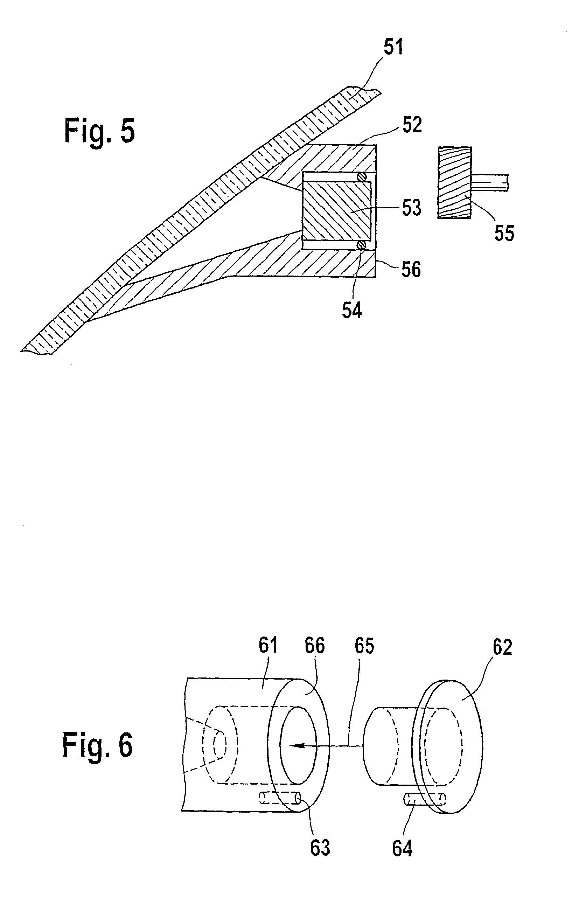

Figur 5 zeigt eine Variante des Ausführungsbeispiels. Bei der Nachbearbeitung der Sensorauflage 56 des Halteelements 52, das mit der Unterlage 51 verbunden ist, schützt ein Verschlusselement 53 den Innenraum des Halteelements 52 vor dem Eindringen von Spänen und/oder Schmutz durch die Bearbeitung der Sensorauflage 56, insbesondere durch den Fräskopf 55. Die Dichtung 54 gewährleistet die wasser- und schmutzdichte Abdichtung des Innenraumes.

Figur 6 zeigt das Halteelement 61 mit Zentrierstiftaufnahme 63 und Zentrierstift 64 zur Ausrichtung des Sensors 62, im bevorzugten Ausführungsbeispiel ein Videosensor, um die Sensorachse 65. Die Minimierung der Verdrehung des Videosensors 62 um die Sensorachse 65 ist beispielsweise notwendig, um eine gute Bildqualität zu erhalten. Während der Nachbearbeitung der Sensorauflage 66 ist das Anbringen der Zentrierstiftaufnahme 63 im gleichen Verfahrensschritt möglich. Die Ausrichtung des Videosensors 62 erfolgt durch den Zentrierstift 64. In einer verbesserten Ausführung ist die Verwendung von zwei oder mehr Zentrierstiftaufnahmen 63 und Zentrierstiften 64 möglich.

Das beschriebene Verfahren und die Vorrichtung sind nicht auf die Befestigung und die Ausrichtung von Videosensoren 13 auf der Windschutzscheibe von Kraftfahrzeugen beschränkt. Das Verfahren und die Vorrichtung eignen sich für alle Sensortypen, die eine Sensorachse 18 aufweisen, insbesondere Ultraschallsensoren, lichtempfindliche Sensoren, Videosensoren und/oder Sensoren für elektromagnetische Strahlung wie Radarstrahlung, beispielsweise Radarsensoren. Insbesondere bei Ultraschallsensoren oder Sensoren für elektromagnetische Strahlung wird die Sensorachse 18 durch die zentrale Achse der Abstrahlkeule definiert. Im bevorzugten Ausführungsbeispiel im Kraftfahrzeug ist die Soll-Richtung 19 bei Ultraschallsensoren ebenfalls relativ zur Fahrachse definiert. Es ist beispielsweise möglich mehrere Sensoren 13 gleichen und/oder verschiedenen Typs über ein Halteelement 12 mit einer Unterlage 11 zu verbinden. Diese Variante des Verfahrens erlaubt die gleichzeitige präzise Befestigung und Ausrichtung mehrerer Sensoren 13 über ein Halteelement 12. Voraussetzung ist lediglich, dass das Halteelement 12 für jeden Sensor 13 eine Sensorauflage 14 aufweist, die nachbearbeitbar ist. Insbesondere ermöglicht das beschriebene Verfahren und die Vorrichtung die Befestigung und die Ausrichtung von zwei Videosensoren, die im wesentlichen dieselbe Szene aufnehmen, insbesondere von Stereokamerasystemen. Die zwei Videosensoren können dabei entweder über ein einziges Halteelement 12 mit zwei Sensorauflagen 14 oder über zwei Halteelemente 12 mit jeweils einer Sensorauflage 14 mit der Unterlage 11 verbunden werden. Als Unterlage 11 sind konvexe, konkave und/oder ebene Oberflächen zur Aufnahme des Halteelements 12 möglich. Die Unterlage 11 und/oder das Halteelement 12 können Bauteiltoleranzen aufweisen, die durch das Verfahren und die Vorrichtung ausgeglichen werden. Die Ausrichtung der Sensorachse 18 des Sensors 13 ist beliebig. Vorzugsweise liegt eine Ausrichtung zur Unterlage 11 und dem Halteelement 12 oder entgegengesetzt vor. Zur Verbindung des Halteelements 12 mit der Unterlage 11 sind andere Verfahren als Klebeprozesse möglich. Insbesondere bei Unterlagen 11 aus Metall oder Kunststoff sind lösbare oder nicht lösbare Verbindungen wie Schrauben oder Nieten denkbar.
In einer weiteren Variante der Ausführung sind Halteelemente 12 ohne Aufnahme 16 und/oder Sensorvorraum 15 möglich. In dieser Ausführungsvariante wird der Sensor 13 direkt auf der Sensorauflage 14 befestigt.
Bei vorhandener Aufnahme 16 und/oder einem Sensorvorraum 15 hängt deren Form von den Eigenschaften des Sensors 13 ab. Die Form der Aufnahme 16 muss den geometrischen Eigenschaften des Sensors 13 angepasst sein, während der Sensorvorraum 15 dem Erfassungswinkel des Sensors 13 entsprechen muss. Die geometrischen Eigenschaften der Sensorauflage 14 müssen ebenfalls dem Sensortyp entsprechen, insbesondere kann eine flächenhafte oder punktförmige Sensorauflage 14 vorliegen. Das Material der Unterlage 11 und/oder des Halteelements 12 muss teilweise oder vollständig für die sensorbeeinflussenden Größen aufgrund der Materialeigenschaften durchlässig sein und/oder durch materialabtragende Bearbeitungsverfahren die Durchlässigkeit der sensorbeeinflussenden Größen erreicht werden. Im Ausführungsbeispiel ist die Windschutzscheibe, die aus Glas besteht, für Licht im sichtbaren Bereich teilweise durchlässig, während die Durchlässigkeit des Halteelements 12 durch Aussparung in Form eines Sensorvorraumes 15 erreicht wurde.

In einer Variante des beschriebenen Ausführungsbeispiels wird die Bestimmung der Abweichung der Sensorachse 18 von der Soll-Richtung 19 und/oder die Nachbearbeitung der Sensorauflage 14 während des Aushärtens des Klebers beim Klebeprozess zur Verbindung des Halteelements 12 mit der Unterlage 11 durchgeführt. Diese Verfahrensweise eignet sich für alle Verbindungsmethoden des Halteelements 12 mit der Unterlage 11, die längere Zeit zur Erreichung der endgültigen Festigkeit benötigen.

In einer weiteren Variante des beschriebenen Ausführungsbeispiels ist denkbar die Reihenfolge der einzelnen Verfahrensschritte zu ändern. Beispielsweise ist es möglich zuerst die Abweichung der Sensorachse 18 von der Soll-Richtung 19 zu bestimmen, anschließend die Sensorauflage 14 aufgrund der ermittelten Abweichung der Sensorachse 18 von der Soll-Richtung 19 nachzubearbeiten, um anschließend das Halteelement 12 mit der Unterlage 11 zu verbinden. Im letzten Verfahrensschritt wird schließlich der Sensor 13 mit dem Halteelement 12 verbunden. Alternativ ist auch nach der Nachbearbeitung zuerst die Befestigung des Sensors 13 mit dem Halteelement 12 und anschließend die Befestigung des Halteelements 12 mit dem Sensor 13 an der Unterlage 11 möglich.

## Patentansprüche

1. Verfahren zur Befestigung und Ausrichtung wenigstens eines Sensors, insbesondere bei Kraftfahrzeugen,
- wobei der Sensor eine Sensorachse aufweist,
- der Sensor über ein Halteelement mit einer Unterlage verbunden wird,
- und das Haltelement eine Sensorauflage für den Sensor besitzt,
**dadurch gekennzeichnet, dass**
- das Halteelement mit der Unterlage verbunden wird,
- die Sensorauflage des Sensors am Halteelement derart nachbearbeitet wird, dass bei eingebautem Sensor die Sensorachse in Soll-Richtung ausgerichtet ist,
- der Sensor an der nachbearbeiteten Sensorauflage mit dem Halteelement verbunden wird.

2. Verfahren nach Anspruch 1, **dadurch gekennzeichnet, dass**
- die ohne Nachbearbeitung vorhandene Abweichung der Sensorachse von der Soll-Richtung ermittelt wird,
- die Sensorauflage des Sensors am Halteelement aufgrund der ermittelten Abweichung der Sensorachse von der Soll-Richtung nachbearbeitet wird,

3. Verfahren nach Anspruch 1, **dadurch gekennzeichnet, dass**
- die Unterlage mit dem daran verbundenen Haltelement in einen Träger eingebaut wird,
- die Sensorauflage des Sensors am Halteelement durch eine mit dem Träger verbundene Nachbearbeitungsvorrichtung derart nachbearbeitet wird, dass bei eingebautem Sensor die Sensorachse in Soll-Richtung ausgerichtet ist.

4. Verfahren nach einem der vorhergehenden Ansprüche, **dadurch gekennzeichnet, dass** der wenigstens eine Sensor wenigstens ein Ultraschallsensor und/oder wenigstens ein lichtempfindlicher Sensor und/oder wenigstens ein Videosensor und/oder wenigstens ein Sensor für elektromagnetische Strahlung, insbesondere Radarstrahlung, ist.

5. Verfahren nach einem der vorhergehenden Ansprüchen, **dadurch gekennzeichnet, dass** eine Sensorachse in Richtung des Halteelements und der Unterlage oder entgegengesetzt vorliegt.

6. Verfahren nach einem der vorhergehenden Ansprüche, **dadurch gekennzeichnet, dass** das Haltelement durch einen Klebeprozess mit der Unterlage verbunden wird, wobei die Nachbearbeitung der Sensorauflage während des Aushärtens des Klebers beim Klebeprozesses erfolgen kann.

7. Verfahren nach einem der vorhergehenden Ansprüche, **dadurch gekennzeichnet, dass** die Nachbearbeitung der Sensorauflage durch materialabtragende Bearbeitungsverfahren, vorzugsweise Fräsen, Bohren und/oder Laserbearbeitung, erfolgt.

8. Verfahren nach einem der vorhergehenden Ansprüche, **dadurch gekennzeichnet, dass** wenigstens eine Zentrierstiftaufnahme an der Sensorauflage, vorzugsweise bei der Nachbearbeitung des Halteelements, positionsrichtig angebracht wird und dadurch die Ausrichtung des Sensors in bezug auf seine Verdrehung um die Sensorachse durch wenigstens einen am Sensor angebrachten Zentrierstift erfolgt.

9. Verfahren nach einem der vorhergehenden Ansprüche, **dadurch gekennzeichnet, dass** das Halteelement eine Aufnahme für wenigstens einen Teil des Sensors hat und/oder das Halteelement einen Sensorvorraum aufweist, die vor dem Eindringen von Spänen und/oder Schmutz bei der Nachbearbeitung, vorzugsweise durch ein Verschlusselement, geschützt werden.

10. Vorrichtung zur Befestigung und Ausrichtung wenigstens eines Sensors, insbesondere bei Kraftfahrzeugen,
- wobei der Sensor eine Sensorachse aufweist,
- mit einem Halteelement, welches eine Sensorauflage besitzt,
**dadurch gekennzeichnet, dass**
- das Halteelement eine Aufnahme für wenigstens einen Teil des Sensors hat,
- die Sensorauflage nachbearbeitbar ist,
- die Sensorauflage die Lage der Sensorachse festlegt,
- und bei der Nachbearbeitung der Sensorauflage zur Ausrichtung der Sensorachse in eine Soll-Richtung die Form der Aufnahme unverändert bleibt.

11. Vorrichtung nach Anspruch 10, **dadurch gekennzeichnet, dass** der wenigstens eine Sensor wenigstens ein Ultraschallsensor und/oder wenigstens ein lichtempfindlicher Sensor und/oder wenigstens ein Videosensor und/oder wenigstens ein Sensor für elektromagnetische Strahlung, insbesondere Radarstrahlung, ist.

12. Vorrichtung nach einem der Ansprüche 10 oder 11, **dadurch gekennzeichnet, dass** das Halteelement an einer Unterlage befestigt wird, wobei das Halteelement Bauteiltoleranzen zeigt, die Unterlage eine konvexe, konkave und/oder ebene Oberfläche zur Aufnahme des Halteelements aufweist, die Unterlage Bauteiltoleranzen hat und/oder die Unterlage aus Glas besteht, vorzugsweise die Windschutzscheibe eines Kraftfahrzeuges ist.

13. Vorrichtung nach Anspruch 12, **dadurch gekennzeichnet, dass** eine Sensorachse in Richtung des Halteelements und der Unterlage oder entgegengesetzt vorliegt.

14. Vorrichtung nach Anspruch 12 oder 13, **dadurch gekennzeichnet, dass** die Unterlage und/oder das Haltelement teilweise oder vollständig für die sensorbeeinflussenden Größen aufgrund der Materialeigenschaften durchlässig ist und/oder durch materialabtragende Bearbeitungsverfahren die Durchlässigkeit der sensorbeeinflussenden Größen erreicht wird.

15. Vorrichtung nach einem der Ansprüche 10 bis 14, **dadurch gekennzeichnet, dass** an der Sensorauflage wenigstens eine Zentrierstiftaufnahme vorhanden ist, wodurch die Ausrichtung der Sensors in bezug auf seine Verdrehung um die Sensorachse durch wenigstens einen am Sensor angebrachten Zentrierstift erfolgen kann.

16. Vorrichtung nach einem der Ansprüche 10 bis 15, **dadurch gekennzeichnet, dass** das Halteelement einen Sensorvorraum hat, wobei der Sensorvorraum so dimensioniert ist, dass nach der Nachbearbeitung der Sensorauflage der Erfassungswinkel des Sensors durch die Wände des Sensorvorraumes nicht eingeschränkt wird.

17. Vorrichtung nach Anspruch 16, **dadurch gekennzeichnet, dass** ein Dichtungsring zwischen dem Halteelement und dem Sensor die Aufnahme und/oder den Sensorvorraum des Halteelements bei eingebautem Sensor gegen die Umgebung abdichtet, wobei der Dichtungsring so bemessen ist, dass er die Verkippung des Sensors nach der Nachbearbeitung aufnehmen kann.

## Claims

1. Method for fastening and aligning at least one sensor, in particular in motor vehicles,
- wherein the sensor has a sensor axis,
- the sensor is connected by means of a holding element to a base,
- and the holding element has a sensor support for the sensor,
**characterized in that**
- the holding element is connected to the base,
- the sensor support of the sensor is finish-machined such that, when the sensor is installed, the sensor axis is aligned in a nominal direction,
- the sensor on the finish-machined sensor support is connected to the holding element.

2. Method according to Claim 1, **characterized in that**
- the deviation which, without finish machining, is present between the sensor axis and the nominal direction is determined,
- the sensor support of the sensor on the holding element is finish-machined on the basis of the determined deviation of the sensor axis from the nominal direction.

3. Method according to Claim 1, **characterized in that**
- the base with the holding element connected thereto is installed into a carrier,
- the sensor support of the sensor on the holding element is finish-machined by means of a finish-machining device connected to the carrier, in such a way that, when the sensor is installed, the sensor axis is aligned in the nominal direction.

4. Method according to one of the preceding claims, **characterized in that** the at least one sensor is at least one ultrasound sensor and/or at least one light-sensitive sensor and/or at least one video sensor and/or at least one sensor for electromagnetic radiation, in particular radar radiation.

5. Method according to one of the preceding claims, **characterized in that** a sensor axis is present in the direction of the holding element and of the base, or opposite thereto.

6. Method according to one of the preceding claims, **characterized in that** the holding element is connected to the base by means of an adhesive bonding process, wherein the finish machining of the sensor support can take place during the hardening of the adhesive during the adhesive bonding process.

7. Method according to one of the preceding claims, **characterized in that** the finish machining of the sensor support is carried out by means of material-removing machining processes, preferably milling, drilling and/or laser machining.

8. Method according to one of the preceding claims, **characterized in that** at least one centring pin receptacle is formed in the correct position on the sensor support, preferably during the finish machining of the holding element, and the alignment of the sensor with respect to the rotation thereof about the sensor axis is thereby realized by means of at least one centring pin attached to the sensor.

9. Method according to one of the preceding claims, **characterized in that** the holding element has a receptacle for at least a part of the sensor and/or the holding element has a sensor prechamber which is protected against the ingress of chips and/or dirt during the finish machining, preferably by means of a closure element.

10. Device for fastening and aligning at least one sensor, in particular in motor vehicles,
- wherein the sensor has a sensor axis,
- having a holding element which has a sensor support,
**characterized in that**
- the holding element has a receptacle for at least a part of the sensor,
- the sensor support can be finish-machined,
- the sensor support defines the position of the sensor axis,
- and, during the finish machining of the sensor support for the alignment of the sensor axis in a nominal direction, the form of the receptacle remains unchanged.

11. Device according to Claim 10, **characterized in that** the at least one sensor is at least one ultrasound sensor and/or at least one light-sensitive sensor and/or at least one video sensor and/or at least one sensor for electromagnetic radiation, in particular radar radiation.

12. Device according to either of Claims 10 and 11, **characterized in that** the holding element is fastened to a base, wherein the holding element exhibits component tolerances, the base has a convex, concave and/or planar surface for receiving the holding element, the base has component tolerances and/or the base is composed of glass, and is preferably the windscreen of a motor vehicle.

13. Device according to Claim 12, **characterized in that** a sensor axis is present in the direction of the holding element and of the base, or opposite thereto.

14. Device according to Claim 12 or 13, **characterized in that** the base and/or the holding element are/is partially or entirely permeable to the sensor-influencing variables owing to material properties, and/or the permeability of the sensor-influencing variables is attained through material-removing machining processes.

15. Device according to one of Claims 10 to 14, **characterized in that**, on the sensor support, there is provided at least one centring pin receptacle, as a result of which the alignment of the sensor with respect to the rotation thereof about the sensor axis can be realized by means of at least one centring pin attached to the sensor.

16. Device according to one of Claims 10 to 15, **characterized in that** the holding element has a sensor prechamber, wherein the sensor prechamber is dimensioned such that, after the finish machining of the sensor support, the detection angle of the sensor is not restricted by the walls of the sensor prechamber.

17. Device according to Claim 16, **characterized in that** a seal ring between the holding element and the sensor seals off the receptacle and/or the sensor prechamber of the holding element with respect to the environment when the sensor is installed, wherein the seal ring is dimensioned such that it can accommodate the tilting of the sensor after the finish machining.

## Revendications

1. Procédé de fixation et d'orientation d'au moins un capteur, notamment pour des véhicules automobiles :
- le capteur comportant un axe de capteur ;
- le capteur étant relié à une surface d'appui par le biais d'un élément de maintien ; et
- l'élément de maintien possédant une surface d'appui de capteur prévue pour le capteur ;
**caractérisé en ce que** :
- l'élément de maintien est relié à la surface d'appui ;
- la surface d'appui de capteur du capteur est retouchée au niveau de l'élément de maintien de telle sorte que lorsque le capteur est encastré, l'axe de capteur est orienté dans la direction théorique requise ;
- le capteur est relié à l'élément de maintien au niveau de la surface d'appui retouchée du capteur.

2. Procédé selon la revendication 1, **caractérisé en ce que** :
- l'écart existant sans retouche de l'axe de capteur est calculé par rapport à la direction théorique ;
- la surface d'appui de capteur du capteur est retouchée au niveau de l'élément de maintien sur la base de l'écart calculé de l'axe de capteur par rapport à la direction théorique.

3. Procédé selon la revendication 1, **caractérisé en ce que** :
- la surface d'appui est encastrée dans un support avec l'élément de maintien y étant relié ;
- la surface d'appui de capteur du capteur est retouchée au niveau de l'élément de maintien par le biais d'un dispositif de retouchage relié au support de telle sorte que lorsque le capteur est encastré, l'axe de capteur soit orienté dans la direction théorique.

4. Procédé selon l'une quelconque des revendications précédentes, **caractérisé en ce que** l'au moins un capteur est au moins un capteur à ultrasons et/ou au moins un capteur photosensible et/ou au moins un capteur vidéo et/ou au moins un capteur de détection de rayonnement électromagnétique, notamment un capteur de détection de rayonnement radar.

5. Procédé selon l'une quelconque des revendications précédentes, **caractérisé en ce qu'**un axe de capteur est positionné en direction de l'élément de maintien et de la surface d'appui ou dans la direction opposée.

6. Procédé selon l'une quelconque des revendications précédentes, **caractérisé en ce que** l'élément de maintien est relié à la surface d'appui par le biais d'un processus de collage, le retouchage de la surface d'appui de capteur pouvant se produire pendant le durcissement de la colle au cours du processus de collage.

7. Procédé selon l'une quelconque des revendications précédentes, **caractérisé en ce que** le retouchage de la surface d'appui de capteur se produit par le biais d'un processus de traitement par retrait de matière, de préférence par fraisage, alésage et/ou traitement laser.

8. Procédé selon l'une quelconque des revendications précédentes, **caractérisé en ce qu'**au moins un espace de logement de tige de centrage est placé dans la bonne position au niveau de la surface d'appui de capteur, de préférence lors du retouchage de l'élément de maintien et que l'orientation du capteur se produit en référence à sa torsion autour de l'axe de capteur par l'intermédiaire d'au moins une tige de centrage placée au niveau du capteur.

9. Procédé selon l'une quelconque des revendications précédentes, **caractérisé en ce que** l'élément de maintien comprend un espace de logement pour au moins une partie du capteur et/ou que l'élément de maintien comporte un pré-espace de capteur, ceux-ci étant protégés contre la pénétration de copeaux et/ou de saletés lors du retouchage, de préférence par le biais d'un élément de fermeture.

10. Dispositif de fixation et d'orientation d'au moins un capteur, notamment pour des véhicules automobiles :
- le capteur comportant un axe de capteur ;
- avec un élément de maintien possédant une surface d'appui de capteur ;
**caractérisé en ce que** :
- l'élément de maintien comprend un espace de logement prévu pour au moins une partie du capteur ;
- la surface d'appui de capteur peut être retouchée ;
- la surface d'appui de capteur détermine la position de l'axe de capteur ; et
- la forme de l'espace de logement restant inchangée lors du retouchage de la surface d'appui de capteur permettant d'orienter l'axe de capteur dans une direction théorique.

11. Dispositif selon la revendication 10, **caractérisé en ce que** l'au moins un capteur est au moins un capteur à ultrasons et/ou au moins un capteur photosensible et/ou au moins un capteur vidéo et/ou au moins un capteur de détection de rayonnement électromagnétique, notamment de détection de rayonnement radar.

12. Dispositif selon l'une quelconque des revendications 10 ou 11, **caractérisé en ce que** l'élément de maintien est fixé à une surface d'appui, l'élément de maintien présentant des tolérances de fabrication de composant, la surface d'appui comportant une surface convexe, concave et/ou plane servant au logement de l'élément de maintien, la surface d'appui présentant des tolérances de fabrication de composant et/ou la surface d'appui étant en verre, de préférence en forme de pare-brise de véhicule automobile.

13. Dispositif selon la revendication 12, **caractérisé en ce qu'**un axe de capteur est positionné en direction de l'élément de maintien et de la surface d'appui ou dans la direction opposée.

14. Dispositif selon la revendication 12 ou 13, **caractérisé en ce que** la surface d'appui et/ou l'élément de maintien sont perméables en totalité ou en partie aux grandeurs ayant une influence sur le capteur du fait des propriétés des matériaux utilisés et/ou que la perméabilité aux grandeurs ayant une influence sur le capteur est obtenue grâce à un procédé de traitement par retrait de matière.

15. Dispositif selon l'une quelconque des revendications 10 à 14, **caractérisé en ce qu'**au moins un espace de logement de tige de centrage est présent au niveau de la surface d'appui de capteur, permettant ainsi de réaliser l'orientation du capteur en référence à sa torsion autour de l'axe de capteur par le biais d'au moins une tige de centrage disposée au niveau du capteur.

16. Dispositif selon l'une quelconque des revendications 10 à 15, **caractérisé en ce que** l'élément de maintien comporte un pré-espace de capteur, le pré-espace de capteur étant dimensionné de telle sorte qu'après la retouche de la surface d'appui de capteur, l'angle de détection du capteur n'est pas limité par les parois du pré-espace de capteur.

17. Dispositif selon la revendication 16, **caractérisé en ce qu'**une bague d'étanchéité prévue entre l'élément de maintien et le capteur étanchéifie l'espace de logement et/ou le pré-espace de capteur de l'élément de maintien par rapport à l'environnement lorsque le capteur est encastré, la bague d'étanchéité étant dimensionnée de façon à pouvoir ensuite loger l'élément de clipsage du capteur après le retouchage.
